# EUROPÄISCHE PATENTANMELDUNG

(11) **EP 4 643 988 A1**
(43) Veröffentlichungstag der Anmeldung: **05.11.2025**
(21) Anmeldenummer: 24173730.3
(22) Anmeldetag: 02.05.2024
(51) Int. Cl.: B01J 19/24, C01B 3/02, C10J 3/00

(54) **REAKTOR ZUR PARTIELLEN OXIDATION VON KOHLENSTOFFHALTIGEN EINSATZSTOFFEN**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: Durst, Oliver, 60439 Frankfurt (DE); Weigand, Peter, 60439 Frankfurt (DE); Müller-Hagedorn, Matthias, 60388 Frankfurt (DE); Ritter, Sven, 60439 Frankfurt (DE); Kress, Michael, 60439 Frankfurt (DE)
(74) Vertreter: Air Liquide

(57) **Zusammenfassung**

Die Erfindung betrifft einen Reaktor, insbesondere Flugstromvergaser, zur Erzeugung von Synthesegas durch partielle Oxidation eines kohlenstoffhaltigen Einsatzstoffs. Der Reaktor umfasst einen Reaktionsraum, einen Abkühlraum und eine den Reaktionsraum und Abkühlraum fluidisch verbindende Gasdurchführung. Die Gasdurchführung weist einen an den Reaktionsraum angrenzenden Gaseinlassbereich und einen an den Abkühlraum angrenzenden Gasauslassbereich auf. Die Zufuhr von Kühlmedium erfolgt über die Gasdurchführung. Erfindungsgemäß ist vorgesehen, dass die Gasdurchführung in Strömungsrichtung des abzukühlenden Synthesegases einen ersten Bereich und einen daran anschließenden zweiten Bereich aufweist, wobei der erste Bereich einen konstanten Durchmesser aufweist, und der zweite Bereich einen in Strömungsrichtung des abzukühlenden Synthesegases divergent verlaufenden Durchmesser aufweist.

## Beschreibung

Die Erfindung betrifft einen Reaktor zur Erzeugung von Synthesegas durch partielle Oxidation eines kohlenstoffhaltigen Einsatzstoffs. Insbesondere betrifft die Erfindung eine Gasdurchführung zwischen dem Reaktionsraum und Abkühlraum eines solchen Reaktors. Die Erfindung zeichnet sich dabei durch eine verbesserte Führung des abzukühlenden Synthesegases beim Übergang vom Reaktionsraum in den Abkühlraum aus.

Die partielle Oxidation von kohlenstoffhaltigen gasförmigen, flüssigen oder festen Brennstoffen mit Sauerstoff ist ein großtechnisch gängiges Verfahren zur Erzeugung von Synthesegas. Synthesegas ist ein Gasgemisch, welches Wasserstoff und zumindest ein Kohlenstoffoxid (Kohlenmonoxid und/oder Kohlendioxid) umfasst. Bei der Flugstromvergasung wird einem Reaktionsraum mit einem Brenner (auch Brennraum) über ein Einsatzstoffzuleitungssystem der kohlenstoffhaltige Einsatzstoff, ein Oxidationsmittel wie Sauerstoff, und optional ein Moderator (zum Beispiel Dampf und/oder Kohlendioxid) zugeleitet. Die vorgenannten Medien reagieren miteinander und bilden das heiße Syntheserohgas. Typische Reaktionstemperaturen sind 1300 °C bis 1500 °C und Drücke von bis zu 100 bar.

Stromabwärts der Reaktion im Reaktionsraum erfolgt in einem zweiten Schritt die Kühlung des Syntheserohgases. Je nach Verfahrensvariante und Einsatzstoff werden dabei grundsätzlich zwei unterschiedliche Abkühlvarianten unterschieden. Erstens die indirekte Wärmeübertragung an ein Kühlmedium in einem Abhitzekessel mit Dampferzeugung, und zweitens die direkte Wärmeübertragung an ein Kühlmedium mittels eines Einspritzkühlers. Letzteres wird im Fachjargon auch als "Quenche" bezeichnet. Zur weiteren Reinigung des abgekühlten Syntheserohgases schließen sich in der Regel ein Wäscher und gegebenenfalls weitere Aufarbeitungsschritte an.

Bei der sogenannten Tauchquenche schließt sich typischerweise direkt am Ausgang des Reaktionsraums ein in das Kühlmedium abgetauchtes Gasleitrohr an, welches das heiße Gas aus dem Reaktionsraum in ein Wasserreservoir leitet, wo es bei der Durchströmung des Wasserreservoirs abgekühlt wird. Solche Systeme sind beispielsweise in der US 2010/0325957 A1, der US 2013/0189165 A1, und der WO 2017/102945 A1 beschrieben.

Bei der Freiquenche wird das heiße Gas aus dem Reaktionsraum über ein Leitelement, beispielsweise ein Leitrohr, direkt in den Abkühlraum (Quenchraum) geleitet, in den über eine oder mehrere Düsen Wasser eingespritzt wird. Solche Systeme sind beispielsweise in der US 2007/0051043 A1 und in der US 2009/0007487 A1 beschrieben.

Beim Quenchrohr wird die Kühlflüssigkeit mit hoher Geschwindigkeit in die in einem Rohr geführte Gasströmung über ein Düsensystem eingeströmt, bevor dieses zur direkten Kühlung mit einem Kühlmedium in den aufgeweiteten Quenchraum strömt. Ein solches System ist in der DD 215 326 beschrieben.

Ein wesentlicher Aspekt bei der Abkühlung von heißem Synthesegas, welches aus dem Reaktionsraum in den Abkühlraum geleitet wird, ist das Strömungsprofil und damit verbunden auch der Wärme- und Stofftransport. Sollte sich bei einem sprunghaften Übergang vom Auslassbereich des Reaktionsraums zum Kühlmedienzufuhrbereich eine Rezirkulationsströmung ausbilden, können Wassertropfen aus dem Mehrphasengebiet zurück in den heißen Reaktionsraum transportiert werden. Unter dem "Mehrphasengebiet" ist dabei der Bereich zu verstehen, in welchem das Kühlmedium zugegeben wird. Das Kühlmedium liegt hier, bevor es durch das heiße Synthesegas verdampft wird, in flüssiger Form vor. Treffen zurücktransportierte Wassertropfen auf sehr heiße Bereiche (zum Beispiel mehr als 800 °C), so können sie in diesen Bereichen Thermospannungen verursachen, die zu einer Zerstörung des verwendeten Materials führt. Bei dem Material kann es sich beispielsweise um feuerfeste Ausmauerungssteine oder hochtemperaturgeeignete metallische Materialen handeln.

Bei der Verwendung von nicht speziell gereinigtem Kühlwasser als Kühlmedium, welches Alkali- und Erdalkalimetallverbindungen enthalten kann, können Siede- oder Verdampfungsrückstände dieser Metallverbindungen auf die vorgenannten heißen Oberflächen treffen. Beispielsweise Natriumverbindungen können auf Aluminiumoxid basierende Ausmauerungssteine bei hohen Temperaturen zerstören. Flüssigkeitstropfen müssen dabei nicht unbedingt durch Zerstäubung des Kühlmediums erzeugt werden. Bereits das schnelle Ausgasen einer gelöste Gase enthaltenden Kühlflüssigkeit durch Temperaturänderung im Abkühlraum kann für die Ausbildung von Flüssigkeitstropfen ausreichend sein. Dies kann insbesondere dann der Fall sein, wenn als Kühlmedium vollständig oder teilweise die Waschflüssigkeit aus einem nachgeschalteten Gaswäscher verwendet wird. Diese ist mit den Bestandteilen des Synthesegases gesättigt.

Eine weitere Möglichkeit der primären Bildung von Flüssigkeitstropfen kann ferner ein höherer Wärmeübergang vom heißen Syntheserohgas auf das Kühlmedium im Bereich der Zugabe des Kühlmediums sein.

Eine allgemeine Aufgabe der vorliegenden Erfindung besteht darin, die vorgenannten Nachteile und Probleme des Standes der Technik wenigstens teilweise zu überwinden.

Eine weitere Aufgabe der Erfindung besteht darin, in einem Reaktor zur partiellen Oxidation von kohlenstoffhaltigen Einsatzstoffen den Übergangsbereich vom Reaktionsraum zum Abkühlraum so zu gestalten, dass eine Rückführung von Kühlmedium aus dem Abkühlraum in den Reaktionsraum insbesondere in Form von Flüssigkeitstropfen vermieden wird.

Ein Beitrag zur mindestens teilweisen Lösung mindestens einer der obigen Aufgaben wird durch den unabhängigen Anspruch geleistet. Die abhängigen Ansprüche stellen bevorzugte Ausführungsformen bereit, die zur mindestens teilweisen Erfüllung mindestens einer der Aufgaben beitragen.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der Erfindung werden zumindest teilweise gelöst durch einen Reaktor zur Erzeugung von Synthesegas durch partielle Oxidation eines kohlenstoffhaltigen Einsatzstoffs, umfassend
(a) einen Reaktionsraum mit einem Brenner, und mit einem Einsatzstoffzuleitungssystem zur Zuführung des Einsatzstoffs und von Oxidationsmittel, zur Erzeugung des Synthesegases im Reaktionsraum;
(b) einen Abkühlraum, aufweisend einen Synthesegasauslass, sowie einen Kühlmedienauslass, wobei der Abkühlraum zur Kühlung des Synthesegases durch direkte Kühlung mit einem Kühlmedium ausgebildet ist;
(c) eine den Reaktionsraum und Abkühlraum fluidisch verbindende Gasdurchführung, welche einen an den Reaktionsraum angrenzenden Gaseinlassbereich und einen an den Abkühlraum angrenzenden Gasauslassbereich aufweist, wobei die Zufuhr von Kühlmedium im Bereich der Gasdurchführung vorgesehen ist.

Erfindungsgemäß ist vorgesehen, dass die Gasdurchführung in Strömungsrichtung des abzukühlenden Synthesegases einen ersten Bereich und einen daran anschließenden zweiten Bereich aufweist, wobei der erste Bereich einen konstanten Durchmesser aufweist, und der zweite Bereich einen in Strömungsrichtung des abzukühlenden Synthesegases divergent verlaufenden Durchmesser aufweist.

Dabei wird die Strömung des heißen Synthesegases im Gasauslassbereich des Reaktionsraums, welcher gleichzusetzen ist mit dem Gaseinlassbereich der Gasdurchführung, zunächst durch einen ersten Bereich der Gasdurchführung mit konstantem Durchmesser geführt. Hier erfolgt die Ausbildung eines turbulenten Strömungsprofils, wodurch Rezirkulationszonen am Ende dieses ersten Bereichs enden. An das Ende des ersten Bereichs, in Strömungsrichtung des abzukühlenden Synthesegases, schließt sich ein zweiter Bereich mit divergent verlaufendem Durchmesser an. "Divergent verlaufend" bedeutet in diesem Zusammenhang, dass sich der Durchmesser vom Anfang des zweiten Bereich in Richtung Ende des zweiten Bereichs, in Strömungsrichtung des abzukühlenden Synthesegases, vergrößert, insbesondere kontinuierlich vergrößert. Ein geeigneter Aufweitungswinkel des divergent verlaufenden zweiten Bereichs kann beispielsweise mittels CFD Berechnungen oder durch die Theorie von Strömungen ermittelt oder geschätzt werden. Durch die räumliche Aufweitung des zweiten Bereichs in Richtung des Abkühlraums werden Rezirkulationsströmungen weiter effektiv verhindert. Außerdem werden die Randbereiche der Strömung verlangsamt. Damit ist ein geringerer Stoff- und Wärmetransport verbunden.

Unter dem jeweiligen Durchmesser der Gasdurchführung ist insbesondere ein frei von abzukühlendem Synthesegas durchströmbarer Durchmesser der Gasdurchführung zu verstehen. Der jeweilige Durchmesser ist dabei insbesondere proportional zum frei durchströmbaren Querschnitt der Gasdurchführung.

Grundsätzlich erfolgt die Strömung des Synthesegases im erfindungsgemäßen Reaktor vom Reaktionsraum in die Gasdurchführung, durch die Gasdurchführung hindurch, und anschließend in den Abkühlraum. Die Strömungsrichtung des abzukühlenden Synthesegases folgt also der räumlichen Abfolge
- Reaktionsraum,
- Gaseinlassbereich der Gasdurchführung,
- Gasdurchführung,
- Gasauslassbereich der Gasdurchführung, und
- Abkühlraum.

Die Zufuhr von Kühlmedium ist im Bereich der Gasdurchführung vorgesehen. Mit anderen Worten, das abzukühlende Synthesegas wird zuerst in der Gasdurchführung mit Kühlmedium kontaktiert. Ein solche Gasdurchführung wird häufig auch als "Quenchrohr" bezeichnet.

Im Gasauslassbereich der Gasdurchführung ist optional eine Blende vorgesehen. Dadurch wird im Gasauslassbereich der Gasdurchführung ein Spray aus Kühlmedium erzeugt, was zu einer innigen Vermischung von Kühlmedium und abzukühlendem Synthesegas im Abkühlraum des Reaktors resultiert. Die eigentliche Hauptkühlung des Synthesegases erfolgt darauf folgend im Abkühlraum des Reaktors.

Bei dem kohlenstoffhaltigen Einsatzstoff, auch Brennstoff, kann es sich um ein gasförmiges, flüssiges und/oder festes Kohlenwasserstoffgemisch handeln. Weitere Beispiels sind Kohle, Biomasse oder kommunaler Abfall. Im Prinzip kommen alle kohlenstoffhaltigen Einsatzstoffe in Frage, welche sich für eine partielle Oxidation zur Erzeugung von Synthesegas eignen.

Das Synthesegas enthält insbesondere Wasserstoff und Kohlenmonoxid.

Das Kühlmedium ist vorzugsweise Wasser.

Das Oxidationsmittel ist vorzugsweise Luft, mit Sauerstoff angereicherte Luft, oder reiner Sauerstoff. Als Sauerstoffquelle kommen/kommt eine Luftzerlegungsanlage und/oder ein Elektrolyseur in Frage.

Über das Einsatzstoffzuleitungssystem kann optional auch ein Moderator zur Kontrolle der Exothermie der partiellen Oxidationsreaktion zugeführt werden. Bei dem Moderator kann es sich um Dampf und/oder Kohlendioxid handeln. Kohlendioxid kann als unerwünschtes Reaktionsprodukt aus dem abgekühlten Rohsynthesegas abgetrennt und als Moderator in den Reaktionsraum des Reaktors zurückgeführt werden.

Der Abkühlraum weist einen Synthesegasauslass und einen Kühlmedienauslass auf. Über den Synthesegasauslass, auch Kaltgasauslass, wird das Gemisch aus abgekühltem Synthesegas und verdampftem Kühlmedium abgezogen. Der Abkühlraum weist üblicherweise einen Füllstand aus kondensiertem Kühlmedium in seinem Sumpfbereich auf. Um diesen Füllstand zu kontrollieren, wird kontinuierlich kondensiertes (überschüssiges) Kühlmedium aus dem Abkühlraum des Reaktors abgezogen.

Eine bevorzugte Ausführungsform des Reaktors ist dadurch gekennzeichnet, dass der erste Bereich der Gasdurchführung als zylindrisch verlaufender Bereich ausgebildet ist, und der zweite Bereich der Gasdurchführung als konisch divergent verlaufender Bereich ausgebildet ist.

Vorzugsweise weist die Gasdurchführung somit an jeder Stelle des ersten und zweiten Bereichs einen runden Querschnitt auf. Insbesondere ist der zweite Bereich der Gasdurchführung in Strömungsrichtung des abzukühlenden Synthesegases konisch divergent ausgebildet. Das heißt der Durchmesser des zweiten Bereichs ist an der Grenzfläche zum ersten Bereich am kleinsten. Insbesondere entspricht der Durchmesser des zweiten Bereichs an dieser Stelle dem Durchmesser des ersten Bereichs. Gleichzeitig ist der Durchmesser des zweiten Bereichs an der Grenzfläche zum Abkühlraum am größten.

Eine bevorzugte Ausführungsform des Reaktors ist dadurch gekennzeichnet, dass der divergent verlaufende Durchmesser des zweiten Bereichs durch einen Aufweitungswinkel α gekennzeichnet ist, wobei der Aufweitungswinkel α einen Betrag von 1 bis 20 ° aufweist, vorzugsweise einen Betrag von 2 bis 10 ° aufweist.

Der Aufweitungswinkel beschreibt denjenigen Winkel, der die Abweichung von einem geraden Verlauf des zweiten Bereichs, mit konstantem Durchmesser, definiert. CFD Berechnungen haben ergeben, dass der vorgenannte Bereich von 1 bis 20 °, vorzugsweise ein Bereich von 2 bis 10 °, zu einer optimalen Absenkung der Strömungsgeschwindigkeit des abzukühlenden Synthesegases im Randbereich der Strömung führt. Durch diese Absenkung wird eine geringe Wärmebelastung für stromab angeordnete Reaktorbereiche erzielt, insbesondere für ein optional stromab angeordnetes Strömungsleitelement erzielt. Weiterhin wird die Interaktion mit einem in der Gasdurchführung erzeugten Flüssigkeitsfilm reduziert, wenn ein solcher Flüssigkeitsfilm mit Hilfe eines Strömungsleitelements in der Gasdurchführung erzeugt wird.

Eine bevorzugte Ausführungsform des Reaktors ist dadurch gekennzeichnet, dass der erste Bereich der Gasdurchführung einen Durchmesser d1 und eine Länge l1 aufweist, wobei das Längenverhältnis von l1 zu d1 (l1:d1) einen Wert von 1 bis 10 aufweist.

Die Länge l1 des ersten Bereichs, auch Einlaufbereichs, angegeben als Verhältnis zum Durchmesser d1, beträgt in vorteilhafter Weise 1-10, da dabei bereits eine teilausgebildete turbulente Strömung mit einem langsameren Randprofil existiert und eventuell ausgebildete Rezirkulationszonen aus dem ersten Bereich dort enden.

Eine bevorzugte Ausführungsform des Reaktors ist dadurch gekennzeichnet, dass die Gasdurchführung einen dritten Bereich aufweist, welcher in Strömungsrichtung des abzukühlenden Synthesegases vor dem ersten Bereich angeordnet ist, und wobei der dritte Bereich einen in Strömungsrichtung des abzukühlenden Synthesegases konvergent verlaufenden Durchmesser aufweist.

Der Übergang vom Reaktionsraum in den ersten Bereich der Gasdurchführung kann zur Verhinderung entstehender Druckverluste und zur Verringerung von Einlaufturbulenzen einen in Strömungsrichtung des abzukühlenden Synthesegases konvergent verlaufenden Durchmesser aufweisen. Insbesondere ist der dritte Bereich der Gasdurchführung als konisch konvergent verlaufender Bereich ausgebildet. Vorzugsweise weist das in Strömungsrichtung des Synthesegases vorhandene Ende des dritten Bereichs, welches an den ersten Bereich angrenzt, einen Durchmesser d1 auf, welcher somit dem Durchmesser d1 des ersten Bereichs der Gasdurchführung entspricht.

Eine bevorzugte Ausführungsform des Reaktors ist dadurch gekennzeichnet, dass mit einem freien Ende des zweiten Bereichs der Gasdurchführung ein metallisches Strömungsleitelement verbunden ist, welches sich in Strömungsrichtung des abzukühlenden Synthesegases innerhalb der Gasdurchführung und in Richtung des Abkühlraums erstreckt.

Durch das Vorhandensein eines Strömungsleitelements, welches sich in Strömungsrichtung des Synthesegases an den zweiten Bereich der Gasdurchführung anschließt, wird ein Flüssigkeitsfilm an der Wandung der Gasdurchführung ausgebildet, wodurch eine effiziente und regelmäßige Kühlung des Synthesegases bereits innerhalb der Gasdurchführung ermöglicht wird. Das Strömungsleitelement kann auch als Strömungsleitblech bezeichnet werden.

Dabei wird das Strömungsleitelement vorzugsweise auf seiner rückwärtigen Seite durch das Kühlmedium gekühlt.

Die Kühlmedienzufuhr und das Strömungsleitlement sind vorzugsweise so angeordnet, dass flüssiges Kühlmedium, insbesondere Kühlwasser, die Rückseite des Strömungsleitelements während der Zuführung des Kühlwassers kühlt. Dadurch wird die Materialbelastung des metallischen Strömungsleitelements effizient vermindert.

Vorzugsweise erfolgt die Zufuhr des Kühlmediums zur Gasdurchführung dabei über einen Ringspalt, wobei der Ringspalt zumindest teilweise durch das Strömungsleitelement und ein Kühlmedienzufuhrsystem des Reaktors ausgebildet wird.

Das Kühlmedienzufuhrsystem des Reaktors umfasst eine Düse, insbesondere Quenchdüse, welche Kühlmedium über zumindest eine Öffnung in der Gasdurchführung in diese einspritzt. Dabei durchströmt das Kühlmedium zunächst einen Ringspalt, welcher zumindest teilweise von dem Strömungsleitelement und dem Kühlmedienzufuhrsystem ausgebildet wird. Das Kühlmedienzufuhrsystem beinhaltet eine Kühlmedienquelle, welche mit der Gasdurchführung fluidisch verbunden ist.

Das Strömungsleitblech kann in einem in Richtung der Gasströmung hinteren Bereich eine Biegung oder einen Knick, das heißt eine Winkeländerung im Verhältnis zur Wandung der Gasdurchführung aufweisen. Insbesondere wird der Winkel im Verhältnis zur Wandung der Gasdurchführung verkleinert. Dadurch trifft die im äußeren Bereich verlangsamte und noch nur gering abgekühlte Rohgasströmung strömungsstörungsfrei auf einen an der Wandung der Gasdurchführung ausgebildeten Wasserfilm, der an der inneren Wandung der Gasdurchführung herabströmt.

Eine bevorzugte Ausführungsform des Reaktors ist dabei dadurch gekennzeichnet, dass die Oberfläche des Strömungsleitelements zur Reduzierung von dessen Wärmelast mit einer keramischen Schutzbeschichtung oder einer metallischen Auftragsschweißung versehen ist.

Durch diese Maßnahme wird die Wärmebelastung des Strömungsleitelements zusätzlich zur aktiven Kühlung durch das Kühlmedium weiter reduziert.

Eine bevorzugte Ausführungsform des Reaktors ist dadurch gekennzeichnet, dass die Wandung des zweiten Bereichs der Gasdurchführung durch ein hochtemperaturgeeignetes Feuerfestmaterial ausgebildet ist, insbesondere ein Material auf Aluminiumoxidbasis ausgebildet ist.

Vorzugsweise ist der Reaktor als Flugstromvergaser ausgebildet.

Die Erfindung wird im Folgenden durch ein Ausführungsbeispiel mit Hilfe einer Zeichnung genauer dargestellt, wobei diese keine Beschränkung der Erfindung bedeutet. Die Zeichnung ist nicht maßstabsgetreu.

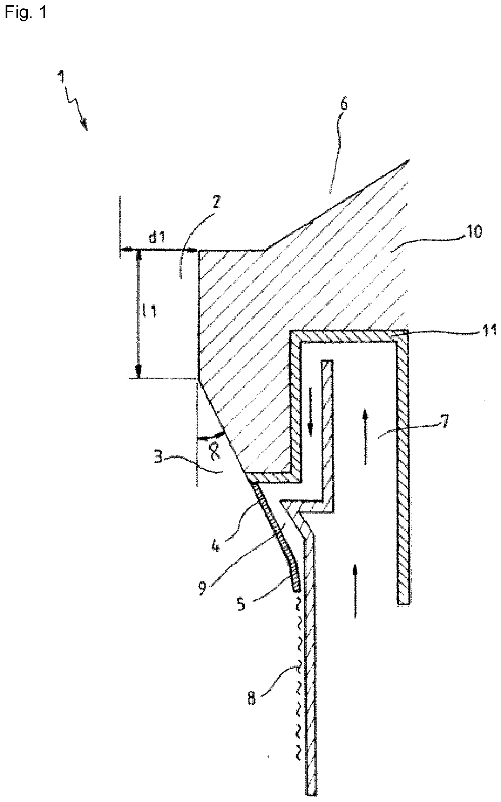

Es zeigt
- Figur 1: eine schematische Darstellung der für die Erfindung wesentlichen Bestandteile des erfindungsgemäßen Reaktors.

Figur 1 zeigt einen Ausschnitt des Reaktors gemäß der Erfindung, wobei insbesondere die erfindungswesentlichen Bestandteile einer Gasdurchführung 1 eines erfindungsgemäßen Reaktors dargestellt sind.

Der Reaktor weist einen Reaktionsraum 6 auf, in welchem Synthesegas durch partielle Oxidation eines kohlenstoffhaltigen Einsatzstoffs erzeugt wird. An den Reaktionsraum 6 grenzt die Gasdurchführung 1 an, welche in einem unteren Bereich in einen Abkühlraum (nicht gezeigt) mündet. Das untere Ende der Gasdurchführung (nicht gezeigt) weist eine Blende auf, welche für eine innige Durchmischung des Kühlmediums und des abzukühlenden Synthesegases sorgt. Der wesentlichen Teil der Abkühlung des Synthesegases findet im Abkühlraum statt, in der Gasdurchführung 1 findet im Wesentlichen eine Vorkühlung des abzukühlenden Synthesegases statt.

Gemäß Figur 1 strömt das abzukühlende Synthesegas von oben nach unten. Das heißt nach Erzeugung im Reaktionsraum 6 passiert dieses die Gasdurchführung 1 und wird anschließend in den (nicht gezeigten) Abkühlraum weitergeführt. Aus dem Abkühlraum wird das gekühlte Synthesegas zusammen mit verdampftem Kühlmedium, hier Kühlwasser, über einen (nicht gezeigten) Kaltgasauslass abgezogen und einer weiteren Verarbeitung unterzogen.

Das heiße im Reaktionsraum 6 erzeugte Synthesegas wird am Boden des Reaktionsraums 6 in einen ersten Bereich 2 der Gasdurchführung 1 geführt. Der Übergang vom Reaktionsraum 6 in den ersten Bereich 2 kann zur Verminderung entstehender Druckverluste und zur Verringerung der Einlaufturbulenzen konisch konvergent ausgebildet sein. Der erste Bereich 2 weist wie dargestellt einen konstanten Durchmesser d1 über eine Länge l1 auf. Der Durchmesser d1 wird dabei so bestimmt, dass die Strömungsgeschwindigkeit des abzukühlenden Synthesegases im Bereich von 10 bis 50 m/s liegt. Geringe Durchmesser d1 sind dabei von Vorteil, da diese die Länge l1 des ersten Bereichs verkürzen. Das Verhältnis der Länge l1 zum Durchmesser d1 beträgt in vorteilhafter Weise 1 bis 10, da dabei eine zumindest teilweise turbulente Strömung mit einem langsamen Randprofil ausgebildet wird und gegebenenfalls Rezirkulationszonen aus dem oberen Teil des ersten Bereichs 2 im unteren Teil des ersten Bereichs 2 enden.

In Strömungsrichtung des Synthesegases daran anschließend weist die Gasdurchführung einen konisch divergent ausgebildeten zweiten Bereich 3 auf, durch welchen die Strömung des Synthesegases aufgeweitet wird und so die Strömung im Randbereich der Gasdurchführung 1 weiter verlangsamt wird. Dabei erfolgt die Strömungsaufweitung so stark, dass sich die Strömung des Synthesegases nicht vom Randbereich der Gasdurchführung 1 ablöst und dadurch keine Rezirkulationszone ausbildet. Der gezeigte Aufweitungswinkel α kann mittels CFD Berechnungen ermittelt werden. Vorzugsweise liegt der Aufweitungswinkel α in einem Bereich von 1 bis 20 °, besonders bevorzugt in einem Bereich von 2 bis 10 °. Durch die Absenkung der Strömungsgeschwindigkeit im äußeren Bereich der Gasdurchführung wird eine geringere Wärmbelastung für ein mit dem zweiten Bereich 3 verbundenes Strömungsleitelement 4, 5 erzielt, sowie weiter stromabwärts die Interaktion mit einem vom Kühlmedium ausgebildeten Flüssigkeitsfilm 8 reduziert.

Der Flüssigkeitsfilm 8 wird durch die Zufuhr von Kühlmedium, auch Quenchmedium, über ein Kühlmedienzufuhrsystem 7 (Quenchdüse) erzeugt. Die Flussrichtung des Kühlmediums durch das Kühlmedienzufuhrsystem 7 ist durch die gezeigten Pfeile angedeutet.

Der konisch divergent ausgebildete zweite Bereich 3 der Gasdurchführung wird durch feuerfeste Steine einer Ausmauerung 10 ausgebildet, beispielsweise auf Basis von Aluminiumoxid. Das an diesem zweiten Bereich 3 befestigte Strömungsleitelement 4, 5 wird mit einem ähnlichen Aufweitungswinkel, vorzugsweise auch im Bereich von 1 bis 20 °, fortgesetzt.

Das Strömungsleitelement 4, 5 weist zwei Bereiche 4 und 5 auf. Diese unterscheiden sich in ihrem Winkel zum Randbereich der Gasdurchführung 1 beziehungsweise in ihrem Aufweitungswinkel zum ersten Bereich 2 der Gasdurchführung. Das Strömungsleitelement 4, 5 bildet zusammen mit dem inneren Teil des Kühlmedienzufuhrsystems 7 einen Ringspalt 9 aus, welcher vom Kühlmedium durchströmt und somit ausreichend gekühlt wird. Dadurch werden Korrosionsvorgänge an den metallischen Bauteilen des Kühlmedienzufuhrsystems 7 verhindert. Am Übergang vom zweiten Bereich 3 zum Strömungsleitelement 4, 5 existiert zwangsläufig eine geringe Diskontinuität. An dieser Stelle können lokal stark begrenzte Rezirkulationswirbel in der Strömung des Synthesegases ausbilden. Diese erstrecken sich jedoch nicht bis zur Kontaktstelle zwischen dem zweiten Bereich 5 des Strömungsleitelements und dem einen Wasserfilm 8 bildenden Kühlmedium.

Der zweite Bereich 5 des Strömungsleitelements ist so geformt, dass die im äußeren Bereich der Gasdurchführung verlangsamte und geringfügig abgekühlte Synthesegasströmung strömungsstörungsfrei auf den Wasserfilm 8, der an der inneren Wandung der Gasdurchführung 1 herabströmt, trifft. Dies wird realisiert, indem sich der Aufweitungswinkel des zweiten Bereichs 5 des Strömungsleitelements von dem Aufweitungswinkel des ersten Bereichs 4 des Strömungsleitelements wie in der Figur dargestellt unterscheidet.

Das Kühlmedienzufuhrsystem 7 ist so ausgebildet, dass eine Umlenkung des Kühlmediums in diesem erfolgt. Das Kühlmedienzufuhrsystem ist durch ein metallisches Trennelement 11 von der Ausmauerung 10 getrennt, welche auch einen Teil des Reaktionsraums 6 des Reaktors bildet. Die thermische Belastung der Ausmauerung 10 wird auch durch die Abfuhr von Wärme durch das strömende Kühlmedium des Kühlmedienzufuhrsystems verringert. Das metallische Trennelement 11, welches einen Teil des Kühlmedienzufuhrsystems 7 bildet, dient auch der Verbindung des Strömungsleitelements 4, 5 mit dem zweiten Bereich 3 der Gasdurchführung. Diese Verbindung kann beispielsweise durch eine Schweißverbindung realisiert werden.

### Liste der Bezugszeichen

- 1: Gasdurchführung
- 2: Erster Bereich der Gasdurchführung
- 3: Zweiter Bereich der Gasdurchführung
- 4: Strömungsleitelement (erster Bereich)
- 5: Strömungsleitelement (zweiter Bereich)
- 6: Reaktionsraum
- 7: Kühlmedienzufuhrsystem (Quenchdüse)
- 8: Wasserfilm
- 9: Ringspalt
- 10: Ausmauerung
- 11: Metallisches Trennelement

## Patentansprüche

1. Reaktor zur Erzeugung von Synthesegas durch partielle Oxidation eines kohlenstoffhaltigen Einsatzstoffs, umfassend
(a) einen Reaktionsraum (6) mit einem Brenner, und mit einem Einsatzstoffzuleitungssystem zur Zuführung des Einsatzstoffs und von Oxidationsmittel, zur Erzeugung des Synthesegases im Reaktionsraum (6);
(b) einen Abkühlraum, aufweisend einen Synthesegasauslass, sowie einen Kühlmedienauslass, wobei der Abkühlraum zur Kühlung des Synthesegases durch direkte Kühlung mit einem Kühlmedium ausgebildet ist;
(c) eine den Reaktionsraum und Abkühlraum fluidisch verbindende Gasdurchführung (1), welche einen an den Reaktionsraum angrenzenden Gaseinlassbereich und einen an den Abkühlraum angrenzenden Gasauslassbereich aufweist, wobei die Zufuhr von Kühlmedium im Bereich der Gasdurchführung (1) vorgesehen ist,
**dadurch gekennzeichnet, dass**
die Gasdurchführung (1) in Strömungsrichtung des abzukühlenden Synthesegases einen ersten Bereich (2) und einen daran anschließenden zweiten Bereich (3) aufweist, wobei der erste Bereich (1) einen konstanten Durchmesser aufweist, und der zweite Bereich (3) einen in Strömungsrichtung des abzukühlenden Synthesegases divergent verlaufenden Durchmesser aufweist.

2. Reaktor nach Anspruch 1, **dadurch gekennzeichnet, dass** der erste Bereich (2) der Gasdurchführung (1) als zylindrisch verlaufender Bereich ausgebildet ist, und der zweite Bereich (3) der Gasdurchführung als konisch divergent verlaufender Bereich ausgebildet ist.

3. Reaktor nach einem der vorhergehenden Ansprüche, **dadurch gekennzeichnet, dass** der divergent verlaufende Durchmesser des zweiten Bereichs (3) durch einen Aufweitungswinkel α gekennzeichnet ist, wobei der Aufweitungswinkel α einen Betrag von 1 bis 20 ° aufweist, vorzugsweise einen Betrag von 2 bis 10 ° aufweist.

4. Reaktor nach einem der vorhergehenden Ansprüche, **dadurch gekennzeichnet, dass** der erste Bereich (2) der Gasdurchführung einen Durchmesser d1 und eine Länge l1 aufweist, wobei das Längenverhältnis von l1 zu d1 (l1:d1) einen Wert von 1 bis 10 aufweist.

5. Reaktor nach einem der vorhergehenden Ansprüche, **dadurch gekennzeichnet, dass** die Gasdurchführung (1) einen dritten Bereich aufweist, welcher in Strömungsrichtung des abzukühlenden Synthesegases vor dem ersten Bereich angeordnet ist, und wobei der dritte Bereich einen in Strömungsrichtung des abzukühlenden Synthesegases konvergent verlaufenden Durchmesser aufweist.

6. Reaktor nach Anspruch 5, **dadurch gekennzeichnet, dass** der dritte Bereich der Gasdurchführung als konisch konvergent verlaufender Bereich ausgebildet ist.

7. Reaktor nach einem der vorhergehenden Ansprüche, **dadurch gekennzeichnet, dass** mit einem freien Ende des zweiten Bereichs der Gasdurchführung ein metallisches Strömungsleitelement (4, 5) verbunden ist, welches sich in Strömungsrichtung des abzukühlenden Synthesegases innerhalb der Gasdurchführung und in Richtung des Abkühlraums erstreckt.

8. Reaktor nach Anspruch 7, **dadurch gekennzeichnet, dass** das Strömungsleitelement (4, 5) auf seiner rückwärtigen Seite durch das Kühlmedium gekühlt wird.

9. Reaktor nach Anspruch 7 oder 8, **dadurch gekennzeichnet, dass** die Zufuhr des Kühlmediums zur Gasdurchführung über einen Ringspalt (9) erfolgt, wobei der Ringspalt (9) zumindest teilweise durch das Strömungsleitelement (4, 5) und ein Kühlmedienzufuhrsystem (7) des Reaktors ausgebildet wird.

10. Reaktor nach einem der Ansprüche 7 bis 9, **dadurch gekennzeichnet, dass** die Oberfläche des Strömungsleitelements (4, 5) zur Reduzierung von dessen Wärmelast mit einer keramischen Schutzbeschichtung oder einer metallischen Auftragsschweißung versehen ist.

11. Reaktor nach einem der vorhergehenden Ansprüche, **dadurch gekennzeichnet, dass** die Wandung des zweiten Bereichs (3) der Gasdurchführung (1) durch ein hochtemperaturgeeignetes Feuerfestmaterial ausgebildet ist, insbesondere ein Material auf Aluminiumoxidbasis ausgebildet ist.

12. Reaktor nach einem der vorhergehenden Ansprüche, **dadurch gekennzeichnet, dass** der Reaktor als Flugstromvergaser ausgebildet ist.
